# EUROPEAN PATENT APPLICATION

(11) **EP 1 878 367 A1**
(43) Date of publication of application: **16.01.2008**
(21) Application number: 07013149.5
(22) Date of filing: 05.07.2007
(51) Int. Cl.: A47J 27/00

(54) **Cookware having a reinforced rim**

(30) Priority: 11.07.2006 US 456818
(71) Applicant: Meyer Intellectual Properties Limited, Kowloon Hong Kong (CN)
(72) Inventor: Cheng, Stanley Kin-Sui, Vallejo, CA 94590 (US)
(74) Representative: Teasdale, Nicola Joanne

(57) **Abstract**

A cookware article (100) in which the multiple continuous layers of metal form both the bottom cooking surface (32) and surrounding sides (31) that define the fluid containing region has a protected rim (33) formed on the inner laminated layers, which curls over and is then bonded to the outermost layer of the laminate slightly below the rim.

## Description

### Background of Invention

The present invention relates to improved cookware vessels, and in particular generally circular shaped pots and pans.

Multi-ply and laminated cookware vessels, such as pots and pans, are well known in the art. They typically deploy copper and/or aluminum as one or more core layers, with surrounding layers to form the exposed interior and/or exterior surface of the cookware.

Among other benefits, the copper and/or aluminum core layers enhance the thermal performance of the cookware; enabling both a faster heating of the foodstuffs and a more uniform temperature distribution. Outer layers of the laminate, that surrounds the copper and/or aluminum core, can provide an exterior surface that is easier to clean or maintain a particularly desired appearance in the kitchen.

Such laminated articles of cookware are fabricated starting with pre-laminated sheet stock. Methods of making sheet stock suitable for eventually forming cookware are disclosed in U.S. Patent 6,427,904 to Groll, titled "Bonding of Dissimilar Metals", as well as U.S. Patent 6,109,504, also to Groll, and titled "Copper Core Cooking Griddle and Method of Making Same". The '504 patent teaches the desirability of forming a sheet stock laminate of stainless steel/copper/stainless steel useful for fabricating cookware via the sequential reduction of thickness by repeated hot roll bonding steps. The preferred compositions in the construction is a diffusion bonded composite of 304L grade stainless steel outer layers with an inner core of high purity C-102 grade copper. However, explosion bonding is initially used to laminate the three layers.

The cookware is then fabricated from the laminated sheet stock by first cutting or trimming the sheet stock into round shape. The round trimmed pieces are then deformed or drawn in a die to form a fluid containing cookware vessel. The trimming process, whether done at the beginning or end of the drawing process, exposes all the layers in the cookware article. Thus, the softer copper or aluminum used in the core of the laminate, along with the stainless steel outer cladding layer, are exposed at the rim. The core materials at the rim being softer and exposed at the rim are susceptible to denting or damage. The strength of the rim is a factor in the selection of the laminating material used to form the cookware article. That is, but for the softer materials exposed at the rim and the need to make the rim strong to resist deformation, the article of cookware could be made of thinner laminates, thus reducing weight as well as saving on material cost.

It is therefore a first object of the present invention to provide multi-ply or laminated cookware that overcomes the above deficiencies in prior art laminated cookware.

Specifically, it is an object of the invention to provide alternative methods of forming laminated cookware that provide a means to protect the exposed core material at the rim.

It is a further object of the invention to provide potentially lighter weight laminated cookware, yet without the deficiency that the softer materials in the laminate can easily be damaged or dented at the rim.

### Cross Reference to Related Applications

This application claims priority from US patent application number 11/456,818. US patent application number 11/456,818 is a Continuation-In-Part application claiming priority to the US Utility patent application for "Laminated Cookware", filed on 6/21/2005 and now having Application No. 11/157,352, which is incorporated herein by reference.

### Summary of Invention

In the present invention, the various objects and advantages of the invention are achieved by providing a clad article of cookware that comprises a substantially circular bottom having an interior cooking surface formed of a first metallic layer, substantially vertical walls surrounding said bottom to form a vessel capable of retaining fluid, said vertical walls terminating at a rim, wherein the interior surface of said vertical walls are contiguous with said interior cooking surface being formed of the first metallic layer, and at least a portion of the exterior surface of said vertical walls are formed of a second metal, and further wherein a portion of the first metal extends beyond the rim and extends down at least a portion of the exterior surface of said vertical walls whereby the second metal is not exposed at the rim.

Another aspect of the invention is characterized by a process for forming an article of cookware that includes forming a proto-vessel having an interior metal layer and an exterior metal layer, the exterior metal layer terminating at a first rim below the height of the interior metal layer that defines a second rim, and then folding the portion of the interior metal layer that exceeds the height of the first rim whereby such portion of the interior layer forms the interior and exterior layer of the cooking vessel at the rim thereof.

The above aspects of the invention provide the advantages that one of the two or more clad or laminated layers are protected at the rim from denting and related physical or chemical degradation.

A further advantage is achieved by using a stronger material, such as stainless steel or titanium, for the inner layer to reinforce a thinner or softer middle or outer layer, allowing a reduction in the weight of the pan, as well as a thicker bottom layer for superior heat transfer to the foodstuffs and thermal uniformity.

The above and other objects, effects, features, and advantages of the present invention will become more apparent from the following description of the embodiments thereof taken in conjunction with the accompanying drawings.

### Brief Description of Drawings

Figures 1A and 1B are cross-sectional elevations of the initial steps in forming the article of cookware.

Figures 2A and 2B are cross-sectional elevations illustrating the steps of forming the rim of the article of cookware.

Figure 3 is a cross-sectional elevation of the finished cookware vessel, prior to the addition of a side handle.

Figures 4A and 4B are cross-sectional elevations of the initial steps in forming the article of cookware according to an alternative embodiment of the invention.

Figures 5A and 5B are cross-sectional elevations illustrating the steps of forming the rim of the article of cookware in the embodiment illustrated in Figure 4.

Figure 6 is a cross-sectional elevation of the alternative embodiment of the cookware article, prior to the addition of a side handle, as resulting from the processes shown in Figures 4 and 5.

### Detailed Description

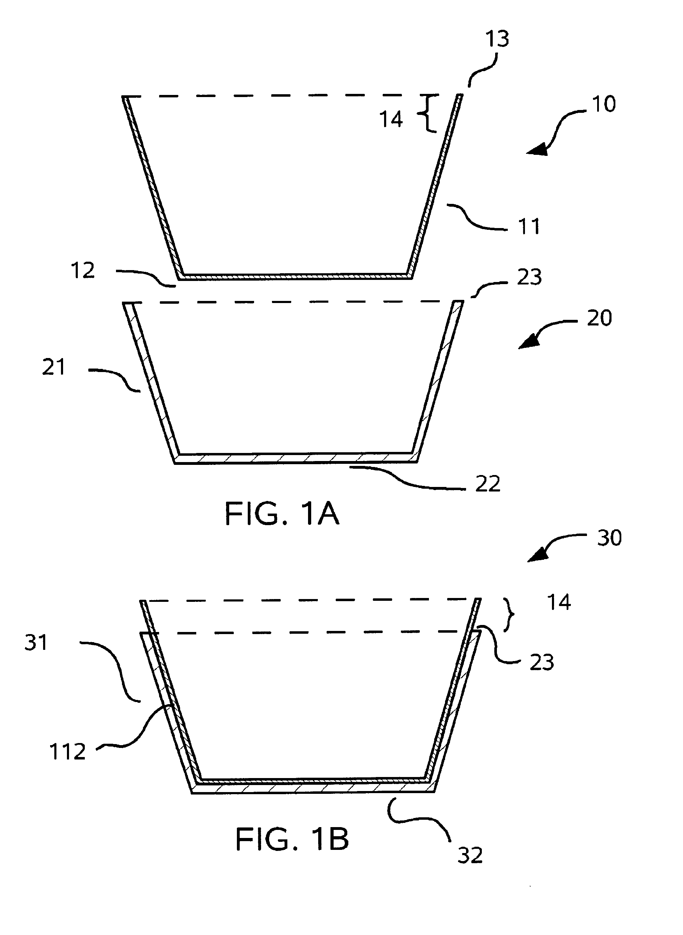

Referring to Figures 1 through 6, wherein like reference numerals refer to like components in the various views, there is illustrated therein a new and improved cookware article having a reinforced rim, generally denominated 100 herein.

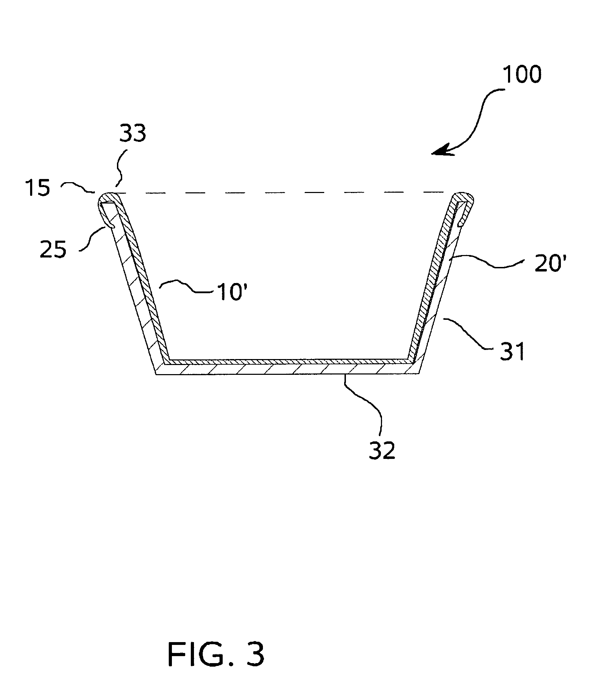

In accordance with the present invention, Figures 1-2 illustrate a sequence of steps in forming the article of cookware 100, whereas Figure 3 is a cross sectional elevation of the completed article of cookware, ready for the attachment of one or more side handles.

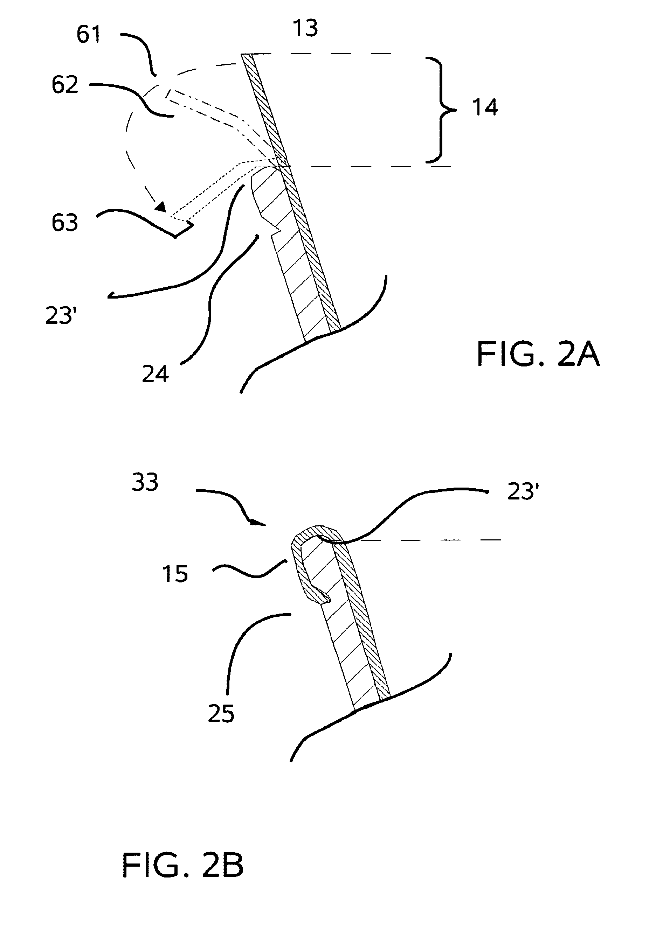

The completed article of cookware 100, as shown in Figure 3 has a bottom 32 surrounded by substantially upright sidewalls 31 to form a fluid containing vessel 100, which terminates at rim 33. The upright side 31 has an inner layer 10' formed from an inner vessel 10 that is nested inside an outer vessel 20 (as shown in Figure 1B). Thus, sidewall 31 has an outer layer 20' formed from the side wall of outer vessel 20. Referring back to Figure 1A, rim 33 is formed by the upper end 14 of the sidewall 11 of inner vessel 10 that extends above the rim 23 of the outer vessel 20. As shown in Figures 2B and 3, this upper end 14 is bent or drawn over rim 23 such that a portion 15 extends downward from the rim 33 covering a portion of outer sidewall 20'.

In Figure 1A, a fluid containing inner vessel 10 having a bottom 12 is surrounded by substantially upright sidewalls 11 which terminates at rim 13 is nested inside a slightly larger outer vessel 20. The generally fluid containing outer vessel 20 has a bottom 22 and is surrounded by a substantially upright sidewall 21 that terminates in rim 23.

In the first step in the process of forming the cookware article 100, the inner 10 and outer vessel 20 are bonded to form proto-vessel 30, shown in Figure 2B. It should be noted that a portion 14 of the upright wall 11 of inner vessel now extends above the rim 23 of outer vessel 20. In proto-vessel 30, bottom portion 32 is formed from bottom 12 and 22 of the inner vessel 10 and the outer vessel 20 respectively. Further, sidewall 31 is formed from sidewalls 11 and 21 of the inner vessel 10 and the outer vessel 20 respectively.

The inner vessel 10 is preferably formed from stainless steel or titanium. The outer vessel 20 is preferable formed of aluminum. It should be further appreciated that the outer vessel 20 is alternatively copper.

Preferably, the bonding of the inner vessel 10 and outer vessel 20 employs at least one of the steps of impact bonding and/or brazing. If brazing is used to bond the inner vessel 10 and outer vessel 20, then a brazing compound is applied to at least one of the exterior of the inner vessel 10 or the interior of the outer vessel 20 prior to the nesting.

To complete the brazing process, the temperature of the proto-vessel 31 is raised to melt the brazing compound, which upon cooling forms a metallurgical bond at interface 112, uniting the inner vessel 10 and outer vessel 20. Pressure is applied to compress the inner vessel 10 and outer vessel 20 against each other at the common interface 112, facilitating the consolidation and flow of the liquid brazing compound. It should be appreciated that each of the inner vessel 10 and outer vessel 20 are drawn in with sufficient dimension tolerances to facilitate the nested insertion to form unbounded proto-vessel 30. It is also preferable that a slight gap be present after nesting to accommodate the solid brazing compound (as well as for the eventual wicking of the molten brazing compound or liquid flux) at the common interface 112, of pro to-vessel 30.

It is further preferred that an "ironing process" be used after brazing or impact bonding. "Ironing" is done by the repetitive steps of deep drawing of proto-vessel 30 in a set of dies with the clearance between male and female die members that are progressively smaller than the actual combined thicknesses of the sidewall 31.

As the outer layer 21, of sidewall 31 to be protected is generally softer than inner layer 11, the thickness of layer 21 is generally reduced. As it can be difficult in the brazing process to fully reflow the liquid flux over the entire areas to be bonded in interface 112, air and moisture can be trapped within this gap. The "ironing process" is also advantageous as it gradually expels air and moisture trapped at the common interface 112. For example, when the outer layer 11 is stainless steel layer, it will remain substantially the same height as in inner vessel 10. However, as the wall thickness of a softer outer layer 21, such as aluminum or copper, will be reduced, the height of this wall will increase as this material is pushed upward during the ironing process. Thus, the final position of the rim of the outer vessel in proto-vessel 30 is shown in Figures 2A as 23'.

Figures 2A-2B illustrate the next step in the inventive process in which the portion 14 of sidewall 11 is rolled over rim 23' to form the final rim 33 of the completed vessel 100. The direction of bending and rolling rim portion 14 is shown by arrow 61, with phantom portions 62 and 63, in broken lines, to show the progressive movement of portion 14 until the rolling process is completed (Figure 2B). Thus, it should be appreciated that the aforementioned process provides method of forming an article of cookware that does not use expensive pre-laminated sheet stock and also results in protecting the softer outer layer of the laminate that would otherwise be exposed and susceptible to damage at the rim.

Another preferred aspect of the fabrication process, illustrated in Figure 2, is to fabricate a groove 24 along the circumference of the outer vessel 20 below the rim 23'. The edge 25 of the rim forming portion 14 is pressed into groove 24 after the rim is rolled or folded over. Pressing the edge 25 results in a flush exterior profile on the cooking vessel that is less likely to trap dirt and debris, as well as being easier to clean. The groove can fabricated by milling before or after forming outer vessel 20. Alternatively, the groove can be produced by stamping the sheet used to form outer vessel 20.

In alternative embodiment of the invention, the article of cookware 100 may include one or more middle layers laminated between either or both of the sidewall pairs 11 and 21 or the bottom pairs 12 and 22. Such middle layer(s) are preferably copper or aluminum, being of a higher thermal conductivity than a stainless steel or titanium inner or outer layer.

When the outer layer 21 is aluminum, it is also preferable to anodize the outer aluminum vessel 20 after folding. If the inner vessel 10 is fabricated from stainless steel it needs to be masked or otherwise protected form the corrosive anodizing bath during this process. In alternative embodiments the outer vessel is titanium, or an alloy thereof. As titanium is generally resistant to the acidic anodizing bath, it need not be masked during the anodizing process.

Generally the sidewall 11 of inner vessel 10 has a thickness that is between about ½ to 1/10 the thickness of the sidewall 21 of the outer vessel 20. It should be appreciated that as the primary strength requirement of a fluid containing vessel is the rim. Thus, folding the rim as shown in Figure 2 and Figure 3 to double the thickness may allow a 2-fold reduction in thickness of the sidewall 11 of inner vessel 10, without a significant reduction in durability of the cookware article. Thus, in the case of using titanium metal to produce an extremely light weight cooking vessel, this 2-fold reduction in titanium thickness has a significant commercial advantage, as titanium metal is considerably more expensive, that is generally between about 3 to 10 times the material cost of stainless steel.

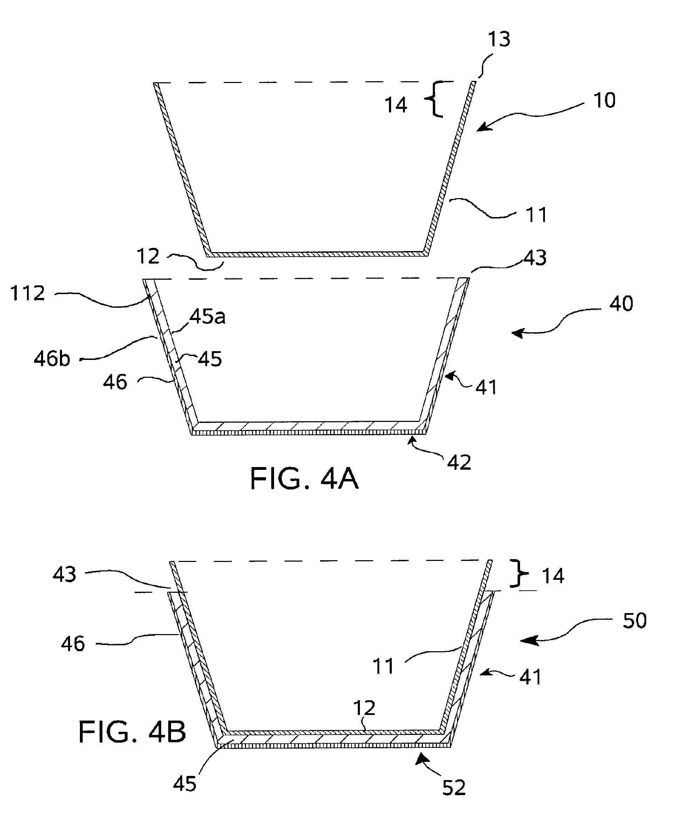

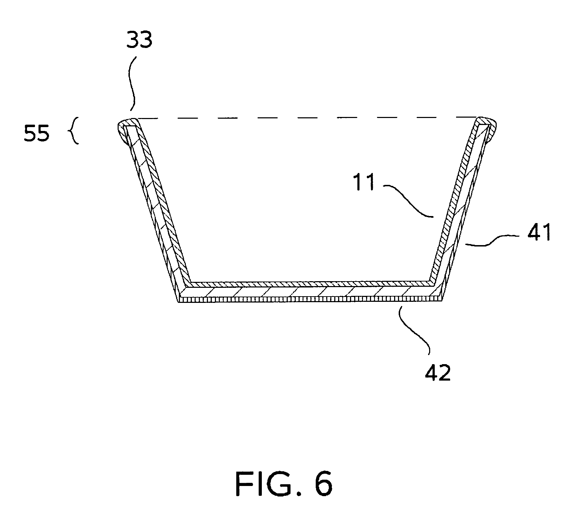

In accordance with another embodiment of the present invention, Figures 4-5 illustrate a sequence of steps in forming an alternative article of cookware 100. Cookware article 100 is shown in a cross-sectional elevation in Figure 6 in a state that is ready for the attachment of one or more side handles.

In Figure 4A, a fluid containing inner vessel 10 having a bottom 12 is surrounded by substantially upright sidewalls 11 which terminates at rim 13. The inner vessel 10 is nested inside a slightly larger outer vessel 40. The generally fluid containing outer vessel 40 has a bottom 42 and is surrounded by a substantially upright sidewall 41 that terminates in rim 43. Outer vessel 40 however is optionally formed by deep drawing a laminate of an inner metal layer 45 and an outer metal layer 46. Thus, when the inner vessel 10 and outer vessel 40 are nested and bonded to form proto-vessel 50, shown in Figure 4B, the inner metal layer 46 becomes the inside or core layer in the laminated cookware article, 100, shown in Figure 6. However, it should also be appreciated that in other embodiments of the invention the inner vessel 10 and the outer vessel 40 can be impact bonded either with or without ironing.

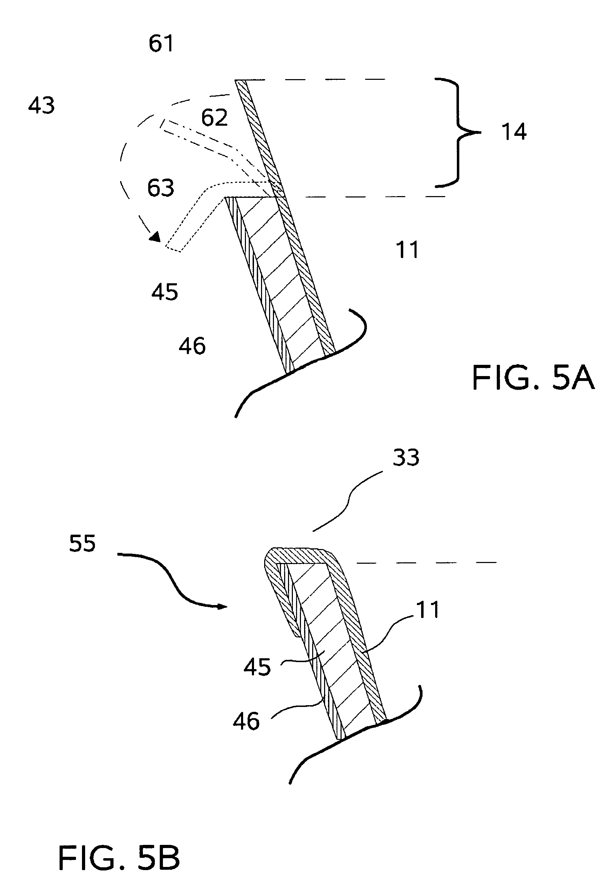

Figure 5A-5B illustrate the next step in the inventive process in which the portion 14 of sidewall 11 is rolled over rim 43 to form the final rim 55 of the completed vessel 100 in Figure 6. The direction of bending and rolling rim portion 14 is shown by arrow 61, with phantom portions 62 and 63, in broken lines, to show the progressive movement of portion 14 until the rolling process is completed as shown in Figure 5B. Thus, the process of bonding nesting the inner and outer vessel, as shown in Figure 4B, and rolling in Figure 5 the extended edge portion 14 results in the enter outer metal layer 46 of the outer vessel 40 being totally encapsulated as well as reinforcing the rim 33. It should be understood that a circular peripheral groove can be provided below rim 33 to receive by insertion the periphery of the interior metal layer that defines the edge of the final rim 55.

While the invention has been described in connection with a preferred embodiment, it is not intended to limit the scope of the invention to the particular form set forth, but on the contrary, it is intended to cover such alternatives, modifications, and equivalents as may be within the spirit and scope of the invention as defined by the appended claims.

## Claims

1. An article of cookware, the article comprising:
a) a substantially circular bottom having an interior cooking surface formed of a first metallic layer;
b) substantially vertical walls surrounding said bottom to form a vessel capable of retaining fluid, said vertical walls terminating at a rim; and
c) wherein interior surfaces of said vertical walls are contiguous with said interior cooking surface being formed of the first metallic layer, and at least a portion of the exterior surface of said vertical walls are formed of a second metal; and
d) wherein a portion of the first metallic layer extends beyond the rim and extends down at least a portion of the exterior surface of said vertical walls whereby the second metal is not exposed at the rim.

2. An article of cookware according to claim 1 wherein said first metallic layer is bonded to said second metal.

3. An article of cookware according to claim 1 or claim 2 wherein the first metallic layer includes at least one metal layer that is harder than the second metal and forms the interior and rim covering portion of the cookware article.

4. An article of cookware according to claim 1, 2 or 3 wherein said second metal extends to cover the exterior bottom of said cooking vessel.

5. An article of cookware according to any of the preceding claims further comprising a third layer of metal laminated between at least a portion of said first metallic layer and the second metal.

6. An article of cookware according to claim 5 wherein the third layer of metal is more thermally conductive than at least one of the first metallic layer and the second metal.

7. An article of cookware according to claim 1 wherein the first metallic layer is comprised of at least two laminated metallic layers, including a thermally conductive layer that forms an encapsulated core of the cookware article walls and bottom, and a harder layer that forms the interior surface of the cookware article and an exterior portion extending over the rim of the cookware article.

8. An article of cookware according to claim 1 wherein the first metallic layer is stainless steel.

9. An article of cookware according to claim 1 wherein the first metallic layer consists substantially of titanium.

10. An article of cookware according to claim 1 wherein the first metallic layer comprises at least one layer of an alloy of titanium.

11. An article of cookware according to claim 1 wherein the second metal is aluminum.

12. An article of cookware according to claim I wherein the second metal is aluminum.

13. An article of cookware according to claim 12 wherein the aluminum is anodized.

14. An article of cookware according to claim 1 wherein the second metal is cast iron.

15. An article of cookware according to claim 1 wherein the second metal is copper.

16. An article of cookware according to claim 1 wherein the rim is formed by first forming the vessel wherein the height of the first metallic layer exceeds the height of the second metal layer and then rolling the first metallic layer over the second metal layer at the junction there between.

17. A method of forming an article of cookware, the method comprising:
a) forming a proto-vessel having an interior metal layer and an exterior metal layer, the exterior metal layer terminating at a first rim below the height of the interior metal layer that defines a second rim,
b) folding the portion of the interior metal layer that exceeds the height of the first rim whereby such portion of the interior layer forms the interior and exterior layer of the cooking vessel at the rim thereof.

18. A method according to claim 17 further comprising the step of providing a circular peripheral groove below the first rim and inserting the periphery of the interior metal layer into the groove.

19. A method according to claim 17 further comprising the steps of forming the proto-vessel by nesting a first vessel in a second vessel and bonding the first vessel to the second vessel, wherein the first vessel has a higher rim than the second vessel.

20. A method according to claim 19 wherein said step of bonding the nested vessels is brazing.

21. A method according to claim 20 further comprising the step of ironing after said step of brazing the nested vessels.
